(19) Europäisches Patentamt
European Patent Office
Office européen des brevets

(11) EP 3 393 623 B1

## (12) EUROPEAN PATENT SPECIFICATION

(45) Date of publication and mention
of the grant of the patent:
**28.04.2021 Bulletin 2021/17**

(21) Application number: **16826433.1**

(22) Date of filing: **23.12.2016**

(51) Int Cl.:
**B01D 53/04** (2006.01)

(86) International application number:
**PCT/GB2016/054071**

(87) International publication number:
**WO 2017/109515 (29.06.2017 Gazette 2017/26)**

(54) **IMPROVEMENTS IN OR RELATING TO THE SEPARATION OF RADON**

VERBESSERUNGEN AN ODER IM ZUSAMMENHANG MIT DER TRENNUNG VON RADON

AMÉLIORATIONS APPORTÉES OU SE RAPPORTANT À LA SÉPARATION DU RADON

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.12.2015 GB 201522759**
**23.12.2015 IT UB20159142**
**27.06.2016 GB 201611118**

(43) Date of publication of application:
**31.10.2018 Bulletin 2018/44**

(73) Proprietor: **Global H&S Limited**
**Letchworth Garden City, Hertfordshire SG6 2HB (GB)**

(72) Inventors:
• **CIPOLLONE, Rita**
**Letchworth Garden City**
**Hertfordshire SG6 2HB (GB)**

• **RANALLI, Marco**
**00030 San Cesareo (RM) (IT)**

(74) Representative: **Chambers, Neil Edward**
**Burrows Chambers Associates**
**Busines Centre West**
**Avenue One**
**Business Park**
**Letchworth Garden City, Herts SG6 2HB (GB)**

(56) References cited:
**EP-A1- 1 752 206     WO-A1-2015/042150**
**CN-B- 102 225 295     CN-B- 102 489 108**
**FR-A1- 2 778 581     US-A- 3 890 121**
**US-A- 5 779 768**

**Description**

This invention regards a process for the separation of Radon from a mixture of gases comprising mainly carbon dioxide. Furthermore, the invention regards a respective isobaric system for separating Radon. Carbon dioxide ($CO_2$) is an inert gas, odourless and colourless, and naturally present in the atmosphere in limited concentrations. Carbon dioxide is especially important because it is used in several processes and applications. It is one of the most commercialized and used technical gases in the world, used in several sectors, including refrigeration, food, chemical, medical, pharmaceutical, metal and electronic industries. Carbon dioxide is mainly produced chemically, as a combustion by-product, biologically and extracted from the soil.

Carbon dioxide, like all fluids extracted from the soil, can be contaminated with radioactive gases, including Radon; more precisely, those fluids can contain a mixture of isotopes of Radon gas known as $^{222}$Rn (Radon), $^{220}$Rn (Thoron), $^{219}$Rn (Actinon). Such radioactive gases can provide a mixture of radioactive elements known as "daughter products", produced from the natural decay of Radon. As a consequence, during purification and/or industrial treatment processes, an increasingly radioactive contamination of plants can occur owing to the natural decay of Radon. Furthermore, Radon and its decay products can contaminate the final product, causing dangers in transport and use of the product itself. Among the decay products, Polonium is the most dangerous for health, not only because of its radioactivity but also its toxic properties.

It has been calculated that exposure to Radon, its isotopes, and its decay products are the cause of more than 20000 deaths in the European Union; furthermore, Radon is the second biggest cause of lung cancer after cigarette smoke.

Most of the techniques known to eliminate Radon from a fluid involve the ageing of the mixture for more than 40 days to allow the nearly complete decay of Radon, whose half-life is 3.8 days. This technique is not applicable for most of the products, except for liquid hydrocarbons that can be stored inside natural caves with low levels of radioactivity for long periods with low expense. Other techniques for the separation of Radon from a mixture of gases, such as distillation, have obtained no significant success, especially in the case of Carbon dioxide, owing to the extreme similarity of the boiling points of Radon and $CO_2$.

Another separation technique is one based on the capacity of Radon to be adsorbed by active carbon. Carbon dioxide has a molecular diameter around 330-361 pm. Radon has a molecular diameter around 417-460 pm, so it is normally bigger than the molecules in which it is usually mixed, such as Nitrogen and Oxygen, the main components of air, or Carbon dioxide. As Radon is bigger than $CO_2$, it should not be possible to hold it on a porous substrate, according to the molecular sieve principle, when it is mixed with Carbon dioxide, only using the difference in molecular dimensions. In trying to take advantage of the different polar characteristics of the molecules for their separation, it is evident that $CO_2$ and Radon are two similarly non-polar molecules, so their separation using active carbon, that tends to create similar bonds with similarly non-polar molecules, should not be possible.

Carbon dioxide, as a matter of fact, binds to the pores of active carbon competing with Radon. The concentration of Radon in $CO_2$ is, however, usually very low, in the order of $10^{-8}/ 10^{-9}$ ppm, so as the molecules of $CO_2$ are usually much more concentrated than Radon and smaller, they should bind the active carbon more easily than Radon, making the separation impossible. Nevertheless, the Radon molecule is highly polarizable, around 5 Å$^3$, opposed to $CO_2$ that is less polarizable, around 2.5 Å$^3$. Carbon dioxide is therefore less affected by the London dispersion force and, as a consequence, by residual van der Waals forces created among active carbon and $CO_2$. Radon, on the contrary, binds with more affinity and is therefore more detained inside the micropores of the active carbon, resulting in a slower flow through them. Active carbons are currently the best substrate in terms of cost/effectiveness ratio for separation, although other possible usable substrates are known. Among the types of active carbons the best results are obtained with the coconut ones, having mean granulometry of 3.5 mm, 450-550 kg/m$^3$ density, 1000-1200 m$^2$/g superficial area.

Affinity of Radon for active carbon has been previously exploited for the measurement of Radon concentration in the air, measuring the gamma radioactivity emitted by the active carbon after the accumulation of Radon decay products. The capacity of Radon to be adsorbed by active carbon has been used for the filtration of Radon gas from air to solve the problem of Radon contamination in the air of a cleanroom for scientific experiments. See for reference "Low Background Techniques and Experimental Challenges for Borexino and its Nylon Vessels. Andrea Pocar. A dissertation presented to the faculty of Princeton University in candidacy for the degree of Doctor of Philosophy. November 2003". In this case the system used is based on the VSA (Vacuum Swing Adsorption) technique, that is an alternation of cycles of high and low pressure, to favour respectively the adsorption on the active carbon and the desorption of Radon therefrom. Said technique is applicable to air or Nitrogen containing Radon in activity concentrations that are constant and lower than 10 kBq/m$^3$. The system, however, is not applicable to a fluid that contains high concentrations of Radon, because Radon, that avidly binds to active carbon because of its high polarizability, is not fully desorbed in short times and only with reducing pressure, as in the VSA technique. Furthermore, the concentration of Radon in the mixture of gases extracted from the soil is highly variable and often reaches concentrations higher than 10 kBq/m$^3$, up to several hundreds of kBq/m$^3$. Finally the VSA technique requires a long time for full desorption, generally 2-3 hours for air. Such long times for desorption of Radon with the VSA technique would cause it to partially decay before it is removed, making the substrate radioactive. The full and quick desorption of Radon from the substrate is then an essential part of the present process.

Document CN101450306B describes a method and an apparatus that regenerates the active carbon through depressurisation and heating of the active carbon to remove Radon. The method requires the depressurization of a tube full of active carbon and the heating of the active carbon to remove the adsorbed Radon therefrom; the system involves also the regulation of a valve to control the flow and allows a small amount of air to pass through the tube of active carbon, under the condition that a certain level of depressurisation is maintained, so that it is possible to remove the Radon adsorbed on the carbon. The apparatus includes a control unit, a power supply, the tube of active carbon, a thermometer, a depressurization pump and a flow control valve, and the tube of active carbon is made of a cylinder with the ends closed by lids and heated by two electrodes.

Neither prior art reference directly deals with the removal of Radon from Carbon dioxide. Furthermore, both require intervention on the level of pressure of the flow passing through the separation unit with active carbon. The depressurization of the flow causes an increase in the costs of the process and the plant. Further, the heating of the active carbon in the presence of Oxygen, that is contained in the air used for the vacuum desorption, increases also the risk of an explosive combustion of the active carbon, with serious hazards for safety, and limits the maximum temperatures that can be reached, making the desorption less efficient.

US3,890,121 discloses a method of removing a noble gas from air comprising the use of activated carbon filters in stages in which absorption and desorption steps in succession are conducted in order to increase the capacity of the filters.

FR 2778581 discloses that a mixture is enriched in one minority component and the other minority components are eliminated by selective permeation across a specific membrane; purification by adsorption at ambient temperature on a solid adsorbent and concentration of the first minority component by successive adsorption(s) and elution(s) until the desired (substantially enriched) concentration is obtained. The initial mixture contains a majority component and two or more minority components. The process involves: selective permeation of the initial gaseous mixture across a membrane which is specific to the gas to be treated, to obtain a mixture enriched in the first minority component and impoverished or slightly enriched in the other minority component(s); purification of the enriched mixture by adsorption at ambient temperature on a solid absorbent, then elution to obtain a gaseous mixture comprising the majority component and the first minority component and from which the other components have been eliminated; concentration of the first minority component by successive adsorption(s) and elution(s) on a solid adsorbent until a final mixture is obtained containing the majority and first minority component, substantially enriched in the first minority component relative to the initial gas and with the desired concentration of first minority component. The majority component is nitrogen, hydrogen, oxygen, gaseous hydrocarbon or carbon dioxide, e.g. air. The first minority component is a rare gas: helium, neon, argon, krypton, xenon or radon, in particular one of their isotopes or a mixture of two isotopes such as 131Xe, 135Xe, 131mXe or 133mXe. After the first permeation stage, the gas flow rate and/or the pressure upstream of the membrane is controlled. The solid adsorbent is chosen specifically to have a high affinity for the first minority constituent. The conditions for elution (temperature, pressure, duration) are carefully selected to allow separation of the first minority component from the other minority components. The purification stage comprises at least two adsorption devices, so one is in the adsorption phase while the other is in desorption. The elution gas used is the purified majority component from the adsorption phase without intermediate storage. The concentration is obtained by multiplying the adsorption - desorption stages and reducing the mass of adsorbent and volume of elution gas in each stage. A different adsorbent with an affinity for the primary component is used in the concentration stage. The gaseous mixture is air and the primary component is Xenon. The selective permeation uses a small flow of nitrogen. The solid adsorbent in the purification stage is active carbon. Elution is carried out at 250 degree C for 20 minutes or more under pressure using a small flow of pure nitrogen. The adsorbent in the concentration stage is Carboxene (R). Installation for carrying out the above process.

The present invention aims to overcome the drawbacks of the known techniques.

According to a first aspect, the present invention provides an isobaric process for the separation of Radon from a mixture of raw gases comprising mainly Carbon dioxide, wherein the process comprises:

adsorption of Radon from the mixture of raw gases on an active carbon substrate produced from coconut shell - having mean granulometry of 3.5 mm, 450-550 kg/m$^3$ density, 1000-1200 m$^2$/g superficial area - at a temperature of about -10°C to about 30°C so as to provide a purified mixture of gases;
heating, or heating and washing the substrate with an inert washing fluid to desorb or detach Radon from the substrate at a temperature of about 120°C to about 180°C ; and cooling the substrate prior to subsequent adsorption, wherein both adsorption and desorption of Radon are conducted at, substantially, atmospheric pressure.

Preferred embodiments of the first aspect are defined in dependent claims 2 to 9.
Preferably, the mixture of gases consists essentially of Carbon dioxide.
Preferably, the process comprises separating Radon from soil-extracted Carbon dioxide.

Preferably, adsorption is conducted with a mixture of raw gases speed of about 0.6 to about 100 m/min (metres per minute). Here speed is in relation to the speed of the mixture of gases in an active carbon separation unit. Preferably, for a Carbon dioxide mixture, the speed is about 2 to about 20 m/min, preferably about 8 to about 12 m/min, and further preferably about 10 m/min.

Preferably, desorption or detachment is conducted with an inert washing fluid speed of greater than about 1m/min. Here speed is in relation to the speed of the mixture of gases in an active carbon separation unit.

Preferably, the inert washing fluid is Carbon dioxide. Most preferably, the inert washing fluid is the same fluid constituting the majority component of the mixture of gases.

Preferably, the process comprises any one or more or combination of the group comprising:

heating the substrate to detach Radon from the substrate and, subsequently but together, washing the substrate whilst additionally heating the substrate;
constant temperature washing of the substrate after heating;
cooling the substrate whilst washing the substrate;
subsequent cooling without washing; and/or
after cooling, pausing the process in readiness for subsequent adsorption.

Preferably, the process additionally comprises a pre-processing step of absorption filtering of the mixture of gases to remove particulate Radon progeny, prior to separation of Radon. Preferably, absorption filtering captures and detains cationic radioactive Radon progeny, specifically $^{214}Pb$, $^{214}Po$ and $^{214}Bi$.

Those skilled in the art will know that the full list of Radon progeny is:

Radon (222Rn) Progeny: 218Po => 214Pb => 214Bi => 214Po =>210Pb => 210Bi =>210Po =>206Pb (stable non-radioactive);
Attinon (219Rn) Progeny: 215Po => 211Pb => 211Bi => 207Tl => 207Pb (stable non-radioactive); and
Thoron (220Rn) Progeny: 216Po => 212Pb => 212Bi => 212Po => 208Tl =>208Pb (stable non-radioactive).

Preferably, adsorption filtering is conducted using a fibrous material, preferably stone wool. Preferably, adsorption filtering is conducted using an appropriate filter media, which may have a large surface area, which may be porous, and which has the ability to bind cationic ions. The media may be powdered, granular or fibrous, especially glass wool, rock wool or the like. Preferably, geothermal steam is used during the heating (*ri*) phase.

In accordance with the first aspect, the present invention also provides a process for separation of Radon from a mixture of raw gases consisting mainly of Carbon dioxide, the process comprising: adsorption (*ad*) of Radon present in the raw mixture in or on an active Carbon substrate (8), and thereby the simultaneous separation of purified Carbon dioxide from Radon; desorption (*de*) of Radon from the substrate (8); and, following removal with a washing fluid (*Gi*), recovery of the substrate (8), wherein the process takes place at, substantially, atmospheric pressure, with no depressurisation of the substrate (8), in a thermal cycle including an adsorption (*ad*) phase, a heating (*ri*) phase, and a cooling (*ra*) phase.

Preferably, a constant temperature (*tc*) phase is added after the heating (*ri*) phase.

Preferably, a pause (*pa*) phase is added after the cooling (*ra*) phase.

The adsorption (*ad*) phase of Radon contained in a/the raw gas (*Gg*) on the substrate (8) made of active carbon occurs at a temperature T1 of about -10°C to about 30°C.

Desorption from substrate (8) made of active carbon involves a heating (*ri*) phase that goes on until a certain temperature T3 of about 120°C to about 180°C is reached.

Preferably, the process is performed simultaneously in more than one unit so that the thermal cycle in each separation unit is shifted from the cycle in the previous separation unit by a time approximately equal to the duration of the adsorption (*ad*) phase.

Preferably, said thermal cycle is performed in at least three separation units (1, 2, 3) and the thermal cycle of each separation unit is shifted from the cycle of the previous separation unit by a time approximately equal to the duration of the adsorption phase, and the cooling (*ra*) phase of each separation unit is simultaneous to the heating (*ri*) phase of the following separation unit.

Preferably, the number of thermal cycles (Nc) that can be performed in each separation unit before the substrate can be considered radioactive according to local regulations is:

$$N_C = A_{sl} / A_{sPb}$$

where $A_{sl}$ is the maximum specific activity accepted by local regulations for $^{210}Pb$, over which the substrate must be considered radioactive, and $A_{sPb}$ is the specific activity expected in the substrate after each cycle and calculated according to

$$A_{sPb} = (0.693 \times N_{0Pb}) / (t_{1/2Pb} \times M_s)$$

where

$$N_{0Pb} = N_{0Rn} - N_{0Rn} \times e^{(-0,693/t_{1/2Rn}) t_c}$$

with

$$N_{0Rn} = (A_0 \times t_{1/2\,Rn} \times \Phi \times t_c) / 0,693$$

where $N_{0Rn}$ are the atoms of Radon bound to the substrate in each cycle that has a duration of $t_c$ seconds, $\Phi$ is the flow in $m^3/s$, Ao is the activity of Radon in the raw gas to be purified in $Bq/m^3$, $t_{1/2Rn}$ is the half life of Radon in seconds, $t_{1/2Pb}$ is the half life of $^{210}Pb$ in seconds, $M_s$ is the mass of substrate calculated as

$$M_s = S \times L \times d$$

and expressed in g, where

$$S = \Phi / V_m$$

and

$$L = T_{ad} \times V_m \times R$$

where $T_{ad}$ is the duration of the adsorption in seconds, $V_m$ the speed of the fluid in m/s, R is the slowdown coefficient of Radon, d is the density of the substrate in $kg/m^3$ and $t_c$ is the amount of time Radon stays inside the separation unit, until it is completely removed from the unit itself.

According to a second aspect of the present invention, there is provided an isobaric system for the separation of Radon from a mixture of raw gases comprising mainly Carbon dioxide, wherein the system comprises a separation unit (1) comprising:

> an active carbon substrate (8), for adsorption of Radon from the mixture of raw gases;
> a supply of the mixture of raw gases (10), for bringing said mixture into contact with the substrate (8);
> a supply of inert washing fluid for washing the substrate;
> an exit for a purified mixture of gases; and
> a supply of heating and/or cooling (4; 5; 6; 9) for heating and/or cooling the substrate,
> the mixture of raw gases, the inert washing fluid and/or the separation unit (1);
> characterised in that the active carbon substrate is produced from coconut shell - having mean granulometry of 3.5 mm, 450-550 $kg/m^3$ density, 1000-1200 $m^2/g$ superficial area and the system is arranged to provide:

>> adsorption of Radon from the mixture of raw gases on the substrate at a temperature of about -10°C to about 30°C so as to provide the purified mixture of gases in the exit;
>> heating, or heating and washing of the substrate to desorb or detach Radon from the substrate at a temperature of about 120°C to about 180°C;
>> and
>> cooling of the substrate prior to subsequent adsorption, wherein
>> the separation unit is arranged to conduct both adsorption and desorption of Radon at, substantially, atmospheric pressure.

Preferred embodiments of the second aspect are defined in dependent claims 11 to 13.

Preferably, the system additionally comprises an upstream filter arranged to adsorb from the mixture of gases particulate Radon progeny, preferably cationic radioactive Radon progeny, specifically $^{214}$Pb, $^{214}$Po and $^{214}$Bi.

Preferably, the upstream filter comprises a fibrous material, preferably stone wool.

Preferably, the system comprises one or more heat exchangers for transferring heating and/or cooling between the substrate, the mixture of raw gases, the inert washing fluid and/or the separation unit.

Preferably, the system comprises an intermediate diathermic fluid for transferring heating and/or cooling, and associated conduits.

Preferably, the system comprises a supply of geothermal steam for heating the substrate, the mixture of raw gases, the inert washing fluid and/or the separation unit;

Preferably, the system comprises any one or more or combination of the group comprising:

heating the substrate to detach Radon from the substrate and, subsequently but together, washing the substrate whilst additionally heating the substrate;

constant temperature washing of the substrate after heating;

cooling the substrate whilst washing the substrate;

subsequent cooling without washing; and/or

after cooling, pausing the process in readiness for starting again.

Preferably, the system comprises at least three separation units of the second aspect, which are linked thermally so as to provide heat exchange.

In accordance with the second aspect, the present disclosure also provides a plant for implementation of a process for the separation of Radon from a mixture of raw gases consisting mainly of Carbon dioxide, including adsorption (*ad*) of the Radon present in the mixture of raw gases on an active carbon substrate (8) and, thereby, the simultaneous separation of purified Carbon dioxide from Radon; desorption (*de*) of Radon from the substrate (8); and, followed by removal of Radon through a washing fluid (*Gi*), recovery of the substrate (8), a process that occurs at, substantially, atmospheric pressure, with no depressurization of the substrate (8), in a thermal cycle including an adsorption (*ad*) phase, a heating (*ri*) phase, and a cooling (*ra*) phase, in a plant that further includes an upstream "daughters filter" for removing particulate Radon progeny.

Preferably, the plant comprises any one or more of the group comprising: a control unit; a power supply; at least one separation unit (1), containing the adsorbing substrate; a high-temperature heat source (4); a low-temperature heat absorber (5); tubes (7) for connecting any said separation unit (1), heat source (4), and heat absorber (5); and one or more motorised valves (V1-V26) that open and close during the functioning of the plant for the adsorption and desorption of Radon in the separation unit (1).

Preferably, the plant comprises: at least three separation units (1, 2, 3); a high-temperature heat source (4); a low-temperature heat absorber (5); a counter-current heat exchanger (6); tubes (7) to connect the separation units (1, 2, 3), the heat source (4), the heat exchanger (6), and the heat absorber (5); and several motorized valves (V1-V26) that open and close during the functioning of the plant for the adsorption and desorption of Radon in the separation units (1, 2, 3). As will be understood by those skilled in the art, a slight pressure differential may be used to supply the mixture of gases to the separation unit, and cause the exit of treated gas(es) therefrom. However, such differentials do not alter the, substantially, atmospheric nature of the adsorption and desorption processes.

In particular, one of the objectives of the invention is to separate Radon from mixtures of gases containing Carbon dioxide extracted from the soil with a process and a plant that involves several cycles for adsorption and desorption of Radon without regulating the pressure. Furthermore, another aim of the invention is to optimise the cycles for adsorption and desorption with respect to energy costs.

Another objective of the plant is to treat high volumes of fluid with a compact plant that occupies relatively small space with a method that, at the same time, allows a reduction of the production of radioactive waste.

For the sake of the continuity of production and to optimise the use of energy it is advantageous to use more than one separation unit, where the thermal cycle of each unit is shifted from the cycle of the previous separation unit by a time equal to the adsorption phase. In that case the plant includes at least three separation units and a counter-current heat exchanger.

One of the advantages obtained by the present invention is to prevent the accumulation of radioactive daughters of Radon inside the refining, condensation and solidification of Carbon dioxide plants that would make them dangerously radioactive, thus reducing the production of radioactive waste and contamination of the plant and the associated risks for the personnel in the plant.

Another advantage regards the increase in safety of the product, especially if it is used for medical use or for food, and the safety of its storage and transport in bulk.

Another advantage comes from the possibility to treat fluids that contain either low or high concentrations of Radon.

Another advantage of the method is the possibility to easily automate the process: the phases are characterized by relatively long periods of time, in the order of minutes, and require very simple sensors, such as temperature sensors and a chronometer, to properly manage the whole process. The computing power required by a programmable logic controller or computer in charge of the management of the plant is therefore low and the complexity of the code (software) is minimal. Furthermore, owing to the fact that the only moving parts are the valves and that those work with long intervals being open or closed, also in the order of minutes, and with low (atmospheric) pressure, reduced maintenance and long life of the components are guaranteed, which favourably affects the costs for making and managing the plant. It must also be considered that, when working at low (atmospheric) pressures and without vacuum, it is not necessary to use pumps that are expensive to buy and maintain and it is possible to use tanks that are not certified for the use in vacuum conditions and, therefore, they are less expensive and not subject to periodic checks.

The present invention, unlike the Chinese document cited, through a proper management of the temperatures that can be safely raised because of the use of a washing fluid, preferably an inert gas, such as $CO_2$ or Nitrogen, increasing the efficiency of the desorption of the radioactive gas, preventing at the same time explosive combustions. This way the adsorbing substrate does not become radioactive and then, at the end of the life of the substrate itself, it can be disposed of without dangers for the operators and additional costs. Other than the proper management of the temperatures, this objective is achieved through the correct sizing of the container for the adsorbing substrate and the proper regulation of adsorption times, chosen according to the concentration of Radon in the fluid that must be purified.

The invention will now be disclosed, by way of example only, with reference to the following drawings, in which:

Figure 1 is a schematic view of the realization form of a plant for the separation of Radon from $CO_2$;

Figure 2 illustrates in detail the separation process in four phases and a pause phase, indicating on the y-axis the temperature and on the x-axis the time;

Figure 3 is a succession of Cartesian coordinate diagrams like the one in Figure 2 that show the temporal succession of the four phases in the separation units that are part of the plant in Figure 1; and

Figure 4 is a Cartesian coordinate diagram of the measurement of radioactivity due to Radon made during the setup of the separation process of the present invention, where the y-axis indicates the radioactivity of $^{222}$Rn in kBq/m$^3$ and the x-axis indicates the time (t).

The plant, in one embodiment of the present invention, includes a "daughters filter" upstream of the purification plant, through which the mixture of gases pass before the separation of Radon. The filter, not shown in the figures, keeps inside it the elements produced from the radioactive decay chain of Radon already present in the mixture, allowing it to remove part of the contaminants and, thereby, reduce the radioactivity of the mixture and the radioactive contamination of the separation unit. The "daughters filter" is preferably constituted by a metal cylinder filled with a compact and fibrous material, such as stone wool, that is able to bind the cationic daughters, mainly $Pb^{2+}$, $Po^{2+}$ and $Bi^{3+}$ and/or characterized by pores small enough to retain them.

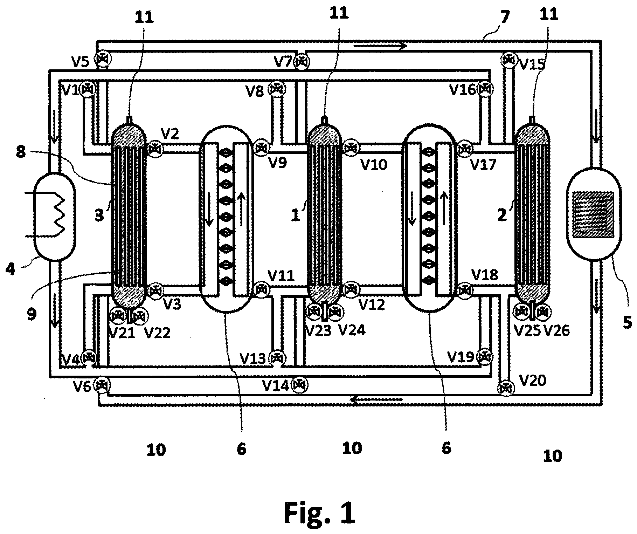

As far as the rest of the plant is concerned, this is exemplified in Figure 1, which is a schematic view of an embodiment of the plant for the separation of Radon from $CO_2$ according to the present invention. In this Figure are indicated, with references 1, 2, and 3, three units for the separation of Radon from $CO_2$; with 4 and 5, respectively, a container of high-temperature diathermic fluid or heat source, and a container of low-temperature diathermic fluid or heat absorber. Reference 6 indicates a counter-current heat exchanger connected to the three separation units 1, 2, and 3; for the sake of the schematization, the heat exchanger 6 has been reproduced twice in Figure 1, although there is only one. A net of tubes that connect the three separation units 1, 2, and 3, the two high-temperature and low-temperature containers 4 and 5, and the heat exchanger 6 is indicated with 7, while V1 through V26 indicate the motorized valves that open and close during the functioning of the plant. In particular, valves V21, V23, and V25 are connected to the raw gas (Gg), while valves V22, V24, V26 are connected to the washing fluid Gi.

It should be evident that the process according to the present invention can be performed also with a single separation unit, or with more than three separation units. However, it is believed that the number of three represents a good compromise between efficiency and cost of the plant.

Each separation unit 1, 2, and 3 is made of a container, preferably in stainless steel, in the form of a cylinder, able to resist corrosion from the contaminants present in the gas mixture made mainly of Carbon dioxide, but also Sulfuric acid, Hydrogen sulphide, Sulphur dioxide, and other corrosive chemicals. Each container has inside an adsorbing substrate indicated with reference 8 and has a bundle of tubes, indicated collectively with reference 9, that pass through it.

The container of the separation units 1, 2, and 3 has flanges at the ends to allow the easy substitution of the substrate 8 at the end of its life and introduction of the bundle of tubes 9 or other equivalent serpentine-type tubes necessary for exchange of heat.

The shape of the container is chosen in order to allow a regular distribution of the adsorbing substrate 8 and to prevent preferred paths of the fluid to purify that reduce its interaction with the substrate. In each separation unit 1, 2, and 3 the entrance is indicated with 10 and the exit with 11.

Each separation unit 1, 2, and 3 is sized in accordance with the recommended flow speed. In each separation unit there is adsorption of Radon onto the substrate 8 and desorption of Radon. The plant includes further devices, not shown, among which are the sensors for the measurement of temperature, pressure, and flow speed, mechanical and electro-mechanical actuators, fluid recirculation pumps, programmable logic controllers (hardware) with relative code (software) that manage the regular succession of the phases, the resynchronization of the phases in case of malfunctioning and emergencies, the management of alarms, the remote control of the process, the safety devices, the interconnection and support structures, the devices for the proper distribution of the flow of gas in the separation unit and for the proper disposition of the adsorbing substrate, the devices for the measurement of the radioactivity of the substrate and of the concentration of radioactivity owing to Radon upstream and downstream of the plant.

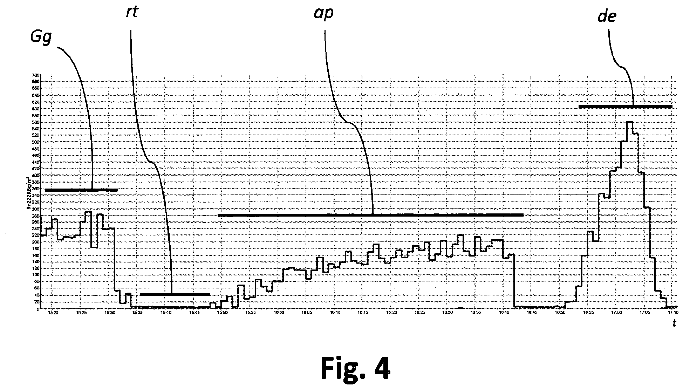

The maximum duration of the adsorption (ad) in each cycle will always have to be lower than the total retention time, indicated as rt in Figure 4 (in order to obtain the maximum purity of the gas). The total duration of the cycle must be set according to the following formulas that allow one to regulate the times in each phase of the cycle to reduce to the lowest amount possible the radioactive contamination of the separation unit and to maximize the duration of the substrate, optimizing at the same time the separation efficiency. The functioning of separation units 1, 2, and 3 is based on a series of cycles of adsorption/desorption of Radon through which Radon inside the substrate is separated from Carbon dioxide and removed to be dispersed in the atmosphere, if allowed by local regulations, or stored in a tank to decay safely, or re-injected in the soil or commercially exploited.

After heating, separation unit 1 is then cooled to a temperature preferably between -10°C and 30°C, and in any case preferably lower than 50°C, to allow the correct adsorption of Radon in the substrate.

Such temperature must be chosen so that the thermal energy of the molecules does not overcome the weak interactions among Radon and the substrate; otherwise, Radon cannot be kept in the substrate itself. Excessively low temperatures, although they might favour the interaction between Radon and the substrate, slow down the movement of Radon towards the pores of the substrate itself, hindering the overall process and increasing the management costs of the plant. The optimal temperature varies also according to the chemical composition of the mixture, being influenced by the action of other molecules that compete with Radon for the binding, and the type of the substrate, being influenced by the high or low affinity between Radon and the substrate.

The container must resist several cycles of heating and cooling and must be impermeable to atmospheric gases, in particular Oxygen, that could lead to explosive combustion of the substrate during high-temperature desorption.

As stated before, the functioning of the plant sees the initial use of a "daughters filter". The filtered mixture is then sent to the separation unit. The mixture flows in controlled conditions of flow, pressure and temperature. Inside the separation unit Radon is kept until a threshold radioactivity level established during the setup of the plant is reached and for an established time. The maximum time of adsorption can be calculated or the level of Radon can be constantly monitored with a detector, preferably based on an ionization chamber, to allow one to identify the moment when the threshold level is reached and to intervene with the next phases of the process.

After the separation process, the purified mixture can be sent as is or it can be collected and sent for further processing, which benefits from the reduction of radioactivity level with lower exposure of workers to ionizing radiation, lower contamination of the downstream industrial plant, and a better quality of the product with regards to safety.

When the threshold level or the threshold time in the first separation unit is reached, the flow of the mixture into separation unit 1 is stopped and, if the plant has a number of separation units higher than one, as in the embodiment described here, the mixture of gases is sent to the next unit, unit 2, in order to allow the plant to work continuously.

When the flow of mixture into the separation unit is stopped, the heating of the unit begins until it reaches the temperature T2, necessary for the detachment of Radon from the separation substrate. Temperature T2, if active carbon is used as a substrate, is preferably between 70 and 120°C. The temperature is then increased further to allow the complete detachment of every Radon molecule, until temperature T3 is reached, preferably between 120 and 180°C, but more preferably between 120 and 150°C, while a washing fluid Gi, for example air or, better, an inert gas, is sent into the separation unit carrying Radon outside the unit. The washing flow is kept for all the time whilst the substrate is over temperature T2. After Radon has been detached, after a time established when setting up the plant, the separation unit is cooled to the starting temperature, preferably lower than 50 °C.

The heat of the diathermic fluid used for heating and cooling the separation unit is preferably recovered using the heat exchanger (6), so that the energy cost of running the plant is reduced. Alternatively to the heat exchanger, to heat and cool the separation units it is possible to use other means that allow one to reach the same goals.

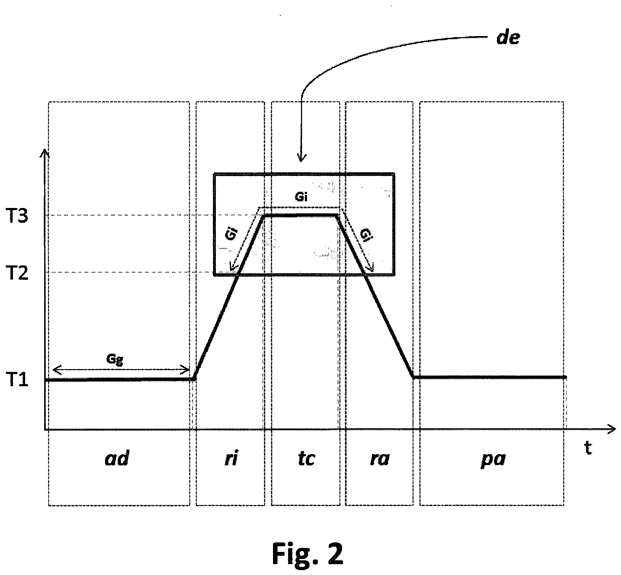

The cycle here outlined is described more precisely in Figure 2. The main components of the plant are described in Figure 1 instead, that is a schematic view of an embodiment of the plant for the separation of Radon from $CO_2$ according to the present invention in four phases, adsorption, heating, constant temperature, and cooling, followed by a pause, better described in Figure 2.

In particular, Figure 2, that has temperature on the y-axis and time on the x-axis, shows the variations of temperature and the temporal succession of adsorption, heating, constant temperature, and cooling phases. The adsorption, heating, constant temperature, cooling, and pause phases are hereby described:

1. adsorption *ad* of Radon contained in the raw gas *Gg* on substrate 8 at temperature *T1*;

2. heating *ri* of substrate 8 until temperature *T2* is reached, where thermal agitation induces the detachment of Radon from the substrate. When temperature *T2* is reached, washing fluid *Gi* is sent into the unit and heating continues until temperature *T3* is reached;

3. once temperature *T3* is reached, it is kept during the constant temperature *tc* phase for the time necessary to all the substrate to evenly reach temperature *T3*. The duration of this phase depends on the heating system used and on the configuration of the separation unit, that is preferably designed to maintain this temperature only for a few minutes and can be equal to zero;

4. cooling *ra* of the separation unit in order to bring the unit's temperature back to the chosen initial value *T1*. When the temperature of the separation unit reaches values below *T2,* the flow of fluid *Gi* is preferably stopped, since Radon has been completely removed;

5. pause *pa*, useful to compensate for any delay in the previous phases, in order to maintain the perfect synchronization of the separation units. The duration of this phase depends on the number of separation units used and can be zero.

During the adsorption phase the radioactivity that can be measured at the exit is nearly zero, because all the Radon is kept inside the separation unit and the Carbon dioxide coming out is free from radioactivity. During this period Radon, which because of weak interactions moves slower than $CO_2$ in the substrate, is not able to go out of the separation unit: this is total retention *rt* phase (Figure 4), which includes the adsorption *ad* phase. When time passes Radon moves nearer and nearer to the exit of the separation unit, also due to the progressive saturation of the substrate, and, if the flow into the separation unit is not stopped in time, with a deviation of the mixture of raw gas *Gg* to the next unit, Radon would progressively begin to come out, and in that case Radon adsorption would be partial. To restore the ability of the substrate to completely keep Radon inside, the substrate must be regenerated through thermal desorption *de,* preferably before the partial adsorption *ap* starts. The substrate is then heated and, once temperature T2 is reached, Radon starts to progressively come out from the separation unit until it is completely released. The rectangular area shown in Figure 2 represents the part of the temperature-time diagram when desorption *de* takes place.

Desorption *de* happens over temperature T2 both in heating phase and in cooling phase. During desorption *de* Radon is separated from the substrate in a short time, in order to allow it to be completely removed before a significant decay in the substrate, which would otherwise provide radioactive contamination of the substrate itself.

The thermal cycle, when adsorption and desorption of Radon happen, is divided into three fundamental phases, adsorption, heating, and cooling, plus two more phases, constant temperature and pause. The constant temperature phase provides homogeneous heating of the substrate, whilst the pause phase, necessary in the case of more than one separating unit working simultaneously, compensates for any delay in the separation units. The durations of adsorption (*ad*), heating (*ri*), constant temperature (*tc*), cooling (*ra*) phases are determined during sizing of the plant in order to reach the maximum adsorption and desorption of Radon from the substrate in the shortest time possible, minimizing the radioactive decay of the Radon in the substrate.

According to the present invention the plant for the separation of Radon requires preferably three separation units 1, 2, and 3 in the plant, and the thermal cycle in each unit has a delay from the one of the previous separation units equal to the length of the adsorption phase.

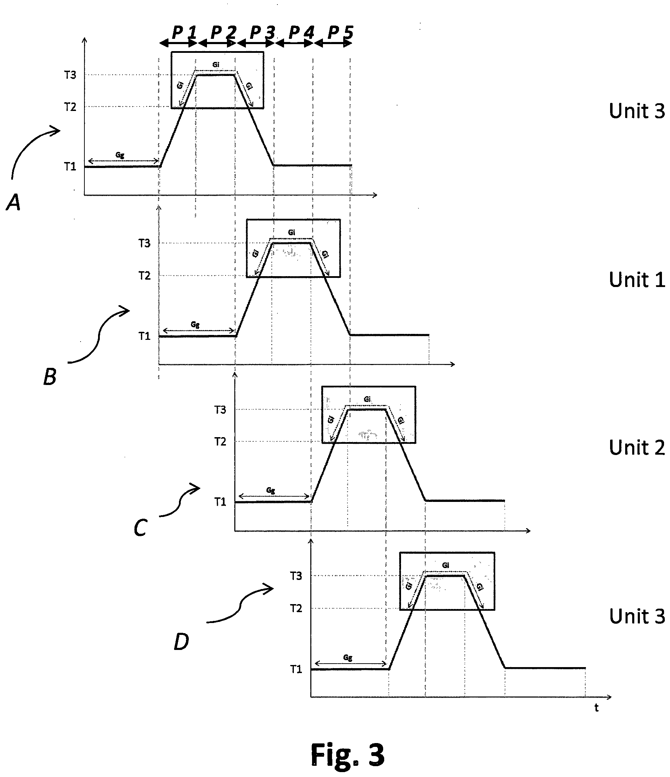

The thermal cycle is presented in Figure 3 with a succession of four Cartesian coordinate diagrams *A*, *B*, *C*, and *D* that show the thermal cycle pictured in Figure 2 for the three separation units of the plant in Figure 1. To facilitate reading, the thermal cycle of separation unit 3 is shown twice. More precisely, diagram *B* shows the thermal cycle of separation unit 1, diagram C shows the cycle of separation unit 2, and diagrams *A* and *D* show two thermal cycles of separation unit 3. Thermal cycles *A*, *B*, *C*, and *D* are shifted in time to guarantee that in each instant at least one separation unit is in adsorption phase. This way it is possible to provide a continuous functioning of the plant. Alternatively with the same process of the invention Radon could be separated from the mixture of gases using only one separation unit, but not continuously.

The following provides a description of the five functional periods in a plant working with three synchronized units. It must be understood that the division into periods is only for description purposes; although the periods are here indicated as having equal duration, it could not happen in reality.

**Period 1 (*P1*)**

In Figure 1 it is shown that separation unit 1 is connected through the opening of valve V23 to the pipe of the raw $CO_2$ to be purified. Its temperature is kept low by the flow of a diathermic fluid in the bundle of tubes of separation unit 1 directed by the opening of valves V7 and V14. At the same time separation unit 3 is heating up, whilst separation unit 2 is resting.

**Period 2 (*P2*)**

In the following period P2, whilst separation unit 1 is still in its state (adsorption phase 1), separation unit 3 has reached the desorption temperature owing to the flow of hot diathermic fluid (opening of valves V1 and V4 in the second half of period 1) and, through the opening of valve V22, the flow of washing fluid, for example air or better an inert gas such as $CO_2$ or Nitrogen, starts in separation unit 3. The other separation units remain in their state.

**Period 3 (*P3*)**

After the desorption phase has completed (closure of valves V1 and V4), separation unit 3 gives its heat, through the counter-current heat exchanger, to separation unit 1 (opening of valves V2, V3, V9, and V11 and closure of valves V7 and V14). At the same time the flow of raw gas into separation unit 1, that is about to start heating up, is stopped and moved to separation unit 2 (closure of valve V23 and opening of valve V25). Temperature in separation unit 2 is again kept low thanks to the flow of cool diathermic fluid in the bundle of tubes of the same separation unit (opening of valves V15 and V20).

**Period 4 (*P4*)**

Separation unit 1 has reached the desorption temperature thanks to the flow of hot diathermic fluid (opening of valves V8 and V13 in the second half of period 3 and closure of valves V2, V3, V9, V11) and, because of opening of valve V24, flow of washing fluid (for example air or better inert gas, such as $CO_2$ or Nitrogen). At the same time separation unit 3 has finished cooling thanks to the heat exchanger (first half of the third period with the opening of valves V2, V3, V9, V11) and to the flow of cool diathermic fluid (second half of the third period, opening of valves V5 and V6) and has then started resting phase (fourth period). Separation unit 2 remains in adsorption phase 1 (valves V15, V20, V25 open).

**Period 5 (*P5*)**

Separation unit 1 has completed the desorption phase (closure of valves V8 and V13) and cooling (phase 3) starts, activating the heat exchanger with separation unit 2 (opening of valves V10, V12, V17, V18). In the second half of period 5, separation unit 1 will finish the cooling phase with the flow of cool diathermic fluid (opening of valves V7 and V14 and the simultaneous closure of valves V10, V12, V17, V18, V24). Separation unit 2, which has received heat from separation unit 1, completes its heating phase thanks to the flow of hot diathermic fluid (opening of valves V16 and V19) and at the same time the flow of washing fluid (*Gi*) starts following opening of valve V26. Separation unit 3 remains in adsorption phase (valves V5, V6, and V21 open).

During desorption, based on the composition of the mixture of raw gas, other contaminants can be separated too, such as $H_2O$, $H_2S$, COS, $C_nH_n$, etc., increasing the overall efficiency of the plant.

The cycles described repeat themselves in the succession described.

Heater 4 integrates the heat lost because of dispersion and the fact that the efficiency of the exchanger is never equal to 100%. Cooler 5, e.g. cooling tower, dissipates excessive heat buil-up because the efficiency of the exchanger is never equal to 100%.

Having described the functioning of the plant, one should now consider its sizing. After verifying the ideal substrate and the best separation conditions, depending on the exact composition of the mixture of $CO_2$ that is to be purified, each separation unit must be sized according to the mass flow of the mixture to be purified and the concentration of Radon. Experimental results show that flow speed $V_m$ of the mixture inside the separation unit able to optimise the separation process is preferably equal to 10 meters per minute (around 0.16 m/s) if an active carbon substrate with characteristics equal to those previously described is used. Section S of the separation unit must therefore be calculated according to the following Formula 1:

$$S = \Phi/V_m \qquad\qquad [\text{FORMULA 1}]$$

where $\Phi$ represents the mass flow of the mixture (in $m^3/s$) into the separation unit and $V_m$ is the speed of the mixture (in m/s).

Accordingly, to guarantee that the residence time of Radon inside the separation unit is much shorter than its decay time, it should remain inside the separation substrate for a time preferably shorter than 50 minutes. This time guarantees that less than 1% of Radon decays inside the separation unit during the run.

This considered, length L (expressed in meters) of the separation unit should be calculated according to the following formula 2:

$$L = T_{ad} \times V_m \times R \qquad\qquad \text{[FORMULA 2]}$$

where $T_{ad}$ represents the adsorption period chosen (expressed in seconds), $V_m$ the speed of the fluid and R the slowdown coefficient of Radon inside the separation unit for the mixture considered (experimentally measured for $CO_2$ adsorbed on active carbon with the characteristics described before as $5.305 \times 10^{-3}$).

With the section (formula 1) and length (formula 2) of the separation unit known, it is easy to calculate the mass of the substrate needed knowing its density using the following formula:

$$M_s = S \times L \times d \qquad\qquad \text{[FORMULA 3]}$$

where $M_s$ is the mass of substrate needed in g, S is the ideal section calculated with formula 1, L is the length needed for the ideal adsorption time according to formula 2, d is the density of the substrate in $g/m^3$.

The maximum time of exposure to Radon of the substrate must be calculated knowing the concentration of Radon in the mixture to be purified, so that it is guaranteed that the decay of Radon inside the substrate, in the whole life of the substrate itself, does not cause an accumulation of long-living radioactive daughters (such as $^{210}$Pb) that would make the product classifiable as radioactive waste according to local regulations.

During the purification cycle, in fact, part of the Radon adsorbed decays generating $^{210}$Pb before Radon is desorbed.

The amount of Radon atoms that bind to the substrate can be calculated as:

$$N_{0Rn} = (A_0 \times t_{1/2\,Rn} \times \Phi \times t_c) / 0.693 \qquad\qquad \text{[FORMULA 4]}$$

where $N_{0Rn}$ are the atoms of Radon that will bind to the substrate in each cycle that has the duration of $t_c$ seconds, $\Phi$ is the flow in $m^3/s$, Ao is the activity of Radon in the raw gas to be purified in $Bq/m^3$. Time $t_c$ must be considered as all the time when Radon stays inside the separation unit, until it is completely removed from the unit itself.

Some of the $N_{0Rn}$ atoms adsorbed by the separation unit in time $t_c$, some of them ($N_{DRn}$) will decay generating an equal number of $^{210}$Pb atoms that we will call $N_{0Pb}$. The atoms that will not decay ($N_{tRn}$) will be removed from the separation unit instead.

$$N_{DRn} = N_{0Pb} = N_{0Rn} - N_{tRn} \qquad\qquad \text{[FORMULA 5]}$$

At the end of a cycle with a duration of $t_c$ seconds, the non-decayed atoms of Radon will be:

$$N_{tRn} = N_{0Rn} \times e^{\,(-0.693/t1/2Rn)\,tc} \qquad\qquad \text{[FORMULA 6]}$$

where $t_{1/2Rn}$ is the half-life of Radon in seconds.

Therefore:

$$N_{0Pb} = N_{0Rn} - N_{0Rn} \times e^{\,(-0.693/t1/2Rn)\,tc} \qquad\qquad \text{[FORMULA 7]}$$

The specific activity of $^{210}$Pb on the substrate of each unit will be:

$$A_{sPb} = (0.693 \times N_{0Pb}) / (t_{1/2Pb} \times M_s) \qquad\qquad \text{[FORMULA 8]}$$

where $M_s$ is the mass of substrate necessary calculated according to formula 3 and expressed in grams.

The number of cycles Nc that is possible to perform for each separation unit before the substrate is considered radioactive according to local regulations is:

$$N_C = A_{sl} / A_{sPb} \qquad\qquad \text{[FORMULA 9]}$$

where $A_{sl}$ is the maximum specific activity accepted by local regulations for $^{210}$Pb, over which the substrate must be considered radioactive, and $A_{sPb}$ is the specific activity expected in the substrate after each cycle and calculated according to formula 8.

The calculations described guarantee that, in case the maximum value of specific activity for $^{210}$Pb is respected, law limits for the daughter elements of $^{210}$Pb (such as $^{210}$Po) are respected too if the specific activity limits for the latter are not lower than the limits for [210]Pb. Otherwise the calculation can be repeated in the same manner for any other daughter element of $^{210}$Pb and the number of cycles Nc would be calculated using the value of the maximum specific activity accepted by local regulations ($A_{sl}$) for each daughter element considered. The maximum number of cycles Nc accepted before the substitution of the substrate would then be the lowest among those calculated for each radionuclide.

Figure 4 shows a Cartesian coordinate diagram of the measure of Radon radioactivity performed during the setup of the separation process in the present invention, where radioactivity of $^{222}$Rn in Bq/m[3] is on the y-axis and time (t) is on the x-axis.

Figure 4 identifies the trend of radioactivity from Radon measured in the entering mixture of raw gas (*Gg*), and in the mixture purified from Radon coming out of one separation unit (*rt* and *ap*) and in the washing fluid (*Gi*) during desorption phase (*de*).

Accordingly, it is clear that the present invention has the following advantages, which are here briefly listed:

- the accumulation of radioactivity in the substrate and its contamination over the limits allowed by law are prevented because of the use of the stated formulas for the proper sizing of the separation units, of the flows and of the duration of each phase of the cycle;
- thanks to synchronization of the separation units, it is possible for the plant to function continuously because the separation units have cycles that are shifted in time;
- thanks to synchronization of the separation units, heat is recovered and transferred from one separation unit directly to another.

The plant includes other devices that were not referred to in the description, including sensors for the measurement of temperature, pressure, and flow speed, several mechanical and electro-mechanical actuators, fluid recirculation pumps, programmable logic controllers with relative code (hardware and software) that manage the regular succession of the phases, the resynchronization of the phases in case of malfunctioning and emergencies, the management of alarms, the remote control of the process, safety devices, the interconnection and support structures, the devices for the proper distribution of the flow of gas in the separation unit and for the proper disposition of the adsorbing substrate, the devices for the measurement of the radioactivity of the substrate and of the concentration of radioactivity due to radon upstream and downstream of the plant.

## Claims

1. An isobaric process for the separation of Radon from a mixture of raw gases comprising mainly Carbon dioxide, wherein the process comprises:

   adsorption of Radon from the mixture of raw gases on an active carbon substrate produced from coconut shell - having mean granulometry of 3.5 mm, 450-550 kg/m[3] density, 1000-1200 m[2]/g superficial area - at a temperature of -10°C to 30°C so as to provide a purified mixture of gases;
   heating, or heating and washing the substrate with an inert washing fluid to desorb or detach Radon from the substrate at a temperature of 120°C to 180°C ; and cooling the substrate prior to subsequent adsorption, wherein both adsorption and desorption of Radon are conducted at, substantially, atmospheric pressure.

2. An isobaric process as claimed in claim 1, wherein adsorption is conducted with a mixture of raw gases speed of 0.6 to 100 m/min.

3. An isobaric process as claimed in any preceding claim, wherein desorption or detachment is conducted with an inert washing fluid speed of greater than 1 m/min.

4. An isobaric process as claimed in any preceding claim comprising any one or more or combination of the group comprising:

   heating the substrate to detach Radon from the substrate and, subsequently but together,
   washing the substrate whilst additionally heating the substrate;

constant temperature washing of the substrate after heating;
cooling the substrate whilst washing the substrate;
subsequent cooling without washing; and/or
after cooling, pausing the process in readiness for subsequent adsorption.

5. An isobaric process as claimed in any preceding claim, wherein the process additionally comprises a pre-processing step of absorption filtering of the mixture of raw gases to remove particulate Radon progeny, prior to separation of Radon, such that absorption filtering captures and/or detains cationic Radon progeny.

6. An isobaric process as claimed in claim 5, wherein absorption filtering is conducted using a fibrous material.

7. Process for separation of Radon from a mixture of raw gases consisting mainly of Carbon dioxide as claimed in any one of claims 1 to 6, the process comprising:

adsorption (*ad*) of Radon present in the raw mixture in or on an active Carbon substrate (8), and thereby the simultaneous separation of purified Carbon dioxide from Radon;
desorption (*de*) of Radon from the substrate (8); and, following removal with a washing fluid (*Gi*), recovery of the substrate (8), wherein the process takes place at, substantially, atmospheric pressure, with substantially no pressurisation and/or depressurisation of the substrate (8), in a thermal cycle including an adsorption (*ad*) phase, a heating (*ri*) phase, and a cooling (*ra*) phase.

8. Process according to claim 7, **characterized in that** it is performed simultaneously in more than one separation unit so that the thermal cycle in each separation unit is shifted from the cycle in the previous separation unit by a time approximately equal to the duration of the adsorption (*ad*) phase.

9. Process according to claim 7 or claim 8 in which said thermal cycle is performed in at least three separation units (1, 2, 3) and the thermal cycle of each separation unit is shifted from the cycle of the previous separation unit by a time approximately equal to the duration of the adsorption phase, and the cooling (*ra*) phase of each separation unit is simultaneous to the heating (*ri*) phase of the following separation unit.

10. An isobaric system for the separation of Radon from a mixture of raw gases comprising mainly Carbon dioxide, wherein the system comprises a separation unit (1) comprising:

an active carbon substrate (8), for adsorption of Radon from the mixture of raw gases;
a supply of the mixture of raw gases (10), for bringing said mixture into contact with the substrate (8);
a supply of inert washing fluid for washing the substrate;
an exit for a purified mixture of gases; and
a supply of heating and/or cooling (4; 5; 6; 9) for heating and/or cooling the substrate,
the mixture of raw gases, the inert washing fluid and/or the separation unit (1);
**characterised in that** the active carbon substrate is produced from coconut shell - having mean granulometry of 3.5 mm, 450-550 kg/m$^3$ density, 1000-1200 m$^2$/g superficial area and the system is arranged to provide:

adsorption of Radon from the mixture of raw gases on the substrate at a temperature of -10°C to 30°C so as to provide the purified mixture of gases in the exit;
heating, or heating and washing of the substrate to desorb or detach Radon from the substrate at a temperature of 120°C to 180°C;
and
cooling of the substrate prior to subsequent adsorption, wherein
the separation unit is arranged to conduct both adsorption and desorption of Radon at, substantially, atmospheric pressure.

11. A system as claimed in claim 10 additionally comprising an upstream absorbent filter arranged to capture and/or detain particulate Radon progeny, wherein the upstream filter comprises a fibrous material.

12. A system as claimed in claim 10 or claim 11 wherein the system comprises at least three separation units (1, 2, 3), the system being arranged such that a thermal cycle of each separation unit is shifted from the cycle of a previous separation unit by a time approximately equal to a duration of an adsorption phase, and a cooling (*ra*) phase of each separation unit is simultaneous to a heating (*ri*) phase of a following separation unit.

**13.** A system as claimed in any one of claims 10 to 12, wherein the system comprises one or more heat exchangers for transferring heating and/or cooling between the substrate (8), the mixture of raw gases, the inert washing fluid and/or the separation unit (1).

**Patentansprüche**

**1.** Isobares Verfahren zum Separieren von Radon aus einem Rohgasgemisch, das hauptsächlich Kohlendioxid enthält, wobei das Verfahren die folgenden Schritte aufweist:

Adsorbieren von Radon aus dem Rohgasgemisch auf ein aus Kokosnussschalen hergestelltes Aktivkohlenstoffsubstrat - mit einer durchschnittlichen Korngrößenverteilung von 3,5 mm, einer Dichte von 450-550 kg/m$^3$, einer Oberfläche von 1000-1200 m$^2$/g - bei einer Temperatur von -10°C bis 30°C, um ein gereinigtes Gasgemisch bereitzustellen;

Erwärmen oder Erwärmen und Waschen des Substrats mit einer inerten Waschflüssigkeit zum Desorbieren oder Ablösen von Radon von dem Substrat bei einer Temperatur von 120°C bis 180°C; und

Abkühlen des Substrats vor einer anschließenden Adsorption,

wobei sowohl die Adsorption als auch die Desorption von Radon bei im Wesentlichen atmosphärischem Druck durchgeführt wird.

**2.** Isobares Verfahren nach Anspruch 1, bei welchem die Adsorption mit einer Gasgemischgeschwindigkeit von 0,6 bis 100 m/min durchgeführt wird.

**3.** Isobares Verfahren nach einem der vorhergehenden Ansprüche, bei welchem die Desorption oder Ablösung bei einer Geschwindigkeit der inerten Waschflüssigkeit von mehr als 1 m/min durchgeführt wird.

**4.** Isobares Verfahren nach einem der vorhergehenden Ansprüche, mit einem oder mehreren oder einer Kombination der Gruppe von Schritten, welche aufweisen:

Erwärmen des Substrats, um Radon von dem Substrat zu lösen und anschließendes, aber zusammen erfolgendes Waschen des Substrats, während des zusätzlichen Erwärmens des Substrats;

Waschen des Substrats bei konstanter Temperatur nach dem Erwärmen;

Abkühlen des Substrats während des Waschens des Substrats;

anschließendes Abkühlen ohne Waschen; und/oder

Anhalten des Verfahrens nach dem Abkühlen in Bereitschaft für eine anschließende Adsorption.

**5.** Isobares Verfahren nach einem der vorhergehenden Ansprüche, bei welchem das Verfahren zusätzlich einen Vorverarbeitungsschritt der Absorptionsfilterung des Rohgasgemischs zur Entfernung partikulärer Radon-Zerfallsprodukte vor dem Separieren von Radon aufweist, derart dass die Absorptionsfilterung kationische Radon-Zerfallsprodukte einfängt und zurückhält.

**6.** Isobares Verfahren nach Anspruch 5, bei welchem die Absorptionsfilterung unter Verwendung eines Fasermaterials durchgeführt wird.

**7.** Verfahren zum Separieren von Radon von einem hauptsächlich aus Kohlendioxid bestehenden Rohgasgemisch, nach einem der Ansprüche 1 bis 6, wobei das Verfahren die folgenden Schritte aufweist:

Adsorbieren (ad) von Radon, das in dem Rohgasgemisch in oder auf einem Aktivkohlesubstrat (8) vorhanden ist, und damit gleichzeitiges Separieren von gereinigtem Kohlendioxid von Radon;

Desorbieren (de) von Radon von dem Substrat (8); und

nach dem Entfernen mit einer Waschflüssigkeit (Gi), Rückgewinnen des Substrats (8), wobei der Prozess bei im Wesentlichen atmosphärischem Druck im Wesentlichen ohne Druckbeaufschlagung und/oder Druckentlastung des Substrats (8), in einem thermischen Zyklus durchgeführt wird, der eine Adsorptionsphase (ad), eine Erwärmungsphase (ri) und eine Kühlphase (ra) aufweist.

**8.** Verfahren nach Anspruch 7, **dadurch gekennzeichnet, dass** es gleichzeitig in mehr als einer Separationseinheit durchgeführt wird, so dass der thermische Zyklus in jeder Separationseinheit gegenüber dem Zyklus in der vorherigen Separationseinheit um eine Zeit versetzt ist, die ungefähr gleich der ist Dauer der Adsorptionsphase (ad).

9. Verfahren nach Anspruch 7 oder Anspruch 8, bei welchem der thermische Zyklus in mindestens drei Separationseinheiten (1, 2, 3) durchgeführt wird und der thermische Zyklus jeder Separationseinheit gegenüber dem Zyklus der vorherigen Separationseinheit um eine Zeit versetzt ist, die ungefähr gleich der Dauer der Adsorptionsphase ist, und die Abkühlphase (ra) jeder Separationseinheit gleichzeitig mit der Erwärmungsphase (ri) der folgenden Separationseinheit erfolgt.

10. Isobares System zum Separieren von Radon aus einem Rohgasgemisch, das hauptsächlich Kohlendioxid aufweist, wobei das System eine Separationseinheit (1) aufweist, mit:

   einem Aktivkohlensubstrat (8) zum Adsorbieren von Radon aus dem Rohgasgemisch;
   einer Zufuhr des Rohgasgemischs, um das Gemisch mit dem Substrat (8) in Kontakt zu bringen;
   einer Zuleitung von inerter Waschflüssigkeit zum Waschen des Substrats;
   einem Auslass für ein gereinigtes Gasgemisch; und
   einer Wärme- und/oder Kältezufuhr (4, 5, 6, 9) zum Erwärmen und/oder Kühlen des Substrats, des Rohgasgemisches, der inerten Waschflüssigkeit und/oder der Separationseinheit;
   **dadurch gekennzeichnet, dass**
   Aktivkohlenstoffsubstrat - mit einer durchschnittlichen Korngrößenverteilung von 3,5 mm, einer Dichte von 450-550 kg/m$^3$, einer Oberfläche von 1000-1200 m$^2$/g - aus Kokosnussschalen hergestellt ist, und das System dazu ausgebildet ist, bereitzustellen:

      das Adsorbieren von Radon aus dem Rohgasgemisch auf dem Substrat bei einer Temperatur von -10°C bis 30°C, um das gereinigte Gasgemisch in dem Auslass bereitzustellen;
      Erwärmen oder Erwärmen und Waschen des Substrats zum Desorbieren oder Ablösen von Radon von dem Substrat bei einer Temperatur von 120°C bis 180°C; und
      Abkühlen des Substrats vor einer anschließenden Adsorption,
      wobei sowohl die Adsorption als auch die Desorption von Radon bei im Wesentlichen atmosphärischem Druck durchgeführt wird.

11. System nach Anspruch 10, zusätzlich mit einem stromaufwärtigen Absorptionsfilter, der zum Einfangen und/oder Zurückhalten partikulärer Radon-Zerfallsprodukten, wobei der stromaufwärtige Filter ein Fasermaterial aufweist.

12. System nach Anspruch 10 oder Anspruch 11, bei welchem mindestens drei Separationseinheiten (1, 2, 3) aufweist, wobei das System derart ausgebildet ist, dass ein thermische Zyklus jeder Separationseinheit gegenüber dem Zyklus der vorherigen Separationseinheit um eine Zeit versetzt ist, die ungefähr gleich der Dauer einer Adsorptionsphase ist, und die Abkühlphase (ra) jeder Separationseinheit gleichzeitig mit einer Erwärmungsphase (ri) der folgenden Separationseinheit erfolgt.

13. System nach einem der Ansprüche 10 bis 12, bei welchem das System einen oder mehrere Wärmetauscher aufweist, um Wärme und/oder Kälte zwischen dem Substrat (8), der Rohgasmischung, der inerten Waschflüssigkeit und/oder der Separationseinheit (1) zu übertragen.


**Revendications**

1. Procédé isobare pour la séparation du radon à partir d'un mélange de gaz bruts comprenant principalement du dioxyde de carbone, dans lequel le procédé comprend :

   l'adsorption du radon à partir du mélange de gaz bruts sur un substrat de charbon actif produit à partir d'une coquille de noix de coco - présentant une granulométrie moyenne de 3,5 mm, une masse volumique de 450 à 550 kg/m$^3$, une surface spécifique de 1000 à 1200 m$^2$/g - à une température de -10 °C à 30 °C de manière à fournir un mélange purifié de gaz ;
   le chauffage, ou le chauffage et le lavage du substrat avec un fluide inerte de lavage pour désorber ou détacher le radon du substrat à une température de 120 °C à 180 °C ; et
   le refroidissement du substrat avant une adsorption ultérieure,
   dans lequel à la fois l'adsorption et la désorption du radon sont effectuées sensiblement à pression atmosphérique.

2. Procédé isobare selon la revendication 1, dans lequel l'adsorption est effectuée avec une vitesse de mélange de gaz bruts de 0,6 à 100 m/min.

3. Procédé isobare selon une quelconque revendication précédente, dans lequel la désorption ou le détachement est effectué avec une vitesse de fluide inerte de lavage supérieure à 1 m/min.

4. Procédé isobare selon une quelconque revendication précédente comprenant l'un quelconque ou plusieurs ou une combinaison du groupe comprenant :

le chauffage du substrat pour détacher le radon du substrat et, ensuite mais ensemble, le lavage du substrat tout en chauffant en plus le substrat ;
le lavage à température constante du substrat après chauffage ;
le refroidissement du substrat tout en lavant le substrat ;
un refroidissement ultérieur sans lavage ; et/ou
après refroidissement, la mise en pause du procédé en vue d'une adsorption ultérieure.

5. Procédé isobare selon une quelconque revendication précédente, dans lequel le procédé comprend en outre une étape de prétraitement consistant à filtrer par absorption le mélange de gaz bruts pour éliminer la descendance particulaire du radon, avant la séparation du radon, de sorte que la filtration par absorption capture et/ou retient la descendance cationique du radon.

6. Procédé isobare selon la revendication 5, dans lequel la filtration par absorption est effectuée en utilisant un matériau fibreux.

7. Procédé de séparation du radon à partir d'un mélange de gaz bruts constitué principalement de dioxyde de carbone selon l'une quelconque des revendications 1 à 6, le procédé comprenant : l'adsorption (*ad*) du radon présent dans le mélange brut dans ou sur un substrat de charbon actif (8), et ainsi la séparation simultanée du dioxyde de carbone purifié à partir du radon ; la désorption (*de*) du radon à partir du substrat (8) ; et, après élimination avec un fluide de lavage (*Gi*), la récupération du substrat (8), dans lequel le procédé a lieu sensiblement à pression atmosphérique, avec sensiblement aucune pressurisation et/ou dépressurisation du substrat (8), dans un cycle thermique comprenant une phase d'adsorption (*ad*), une phase de chauffage (*ri*) et une phase de refroidissement (*ra*).

8. Procédé selon la revendication 7, **caractérisé en ce qu'**il est mis en œuvre simultanément dans plus d'une unité de séparation de sorte que le cycle thermique dans chaque unité de séparation est décalé par rapport au cycle dans l'unité de séparation précédente d'un temps approximativement égal à la durée de la phase d'adsorption (*ad*).

9. Procédé selon la revendication 7 ou la revendication 8, dans lequel ledit cycle thermique est mis en œuvre dans au moins trois unités de séparation (1, 2, 3) et le cycle thermique de chaque unité de séparation est décalé par rapport au cycle de l'unité de séparation précédente d'un temps approximativement égal à la durée de la phase d'adsorption, et la phase de refroidissement (*ra*) de chaque unité de séparation est simultanée à la phase de chauffage (*ri*) de l'unité de séparation suivante.

10. Système isobare pour la séparation du radon à partir d'un mélange de gaz bruts comprenant principalement du dioxyde de carbone, dans lequel le système comprend une unité de séparation (1) comprenant :

un substrat de charbon actif (8), pour l'adsorption du radon à partir du mélange de gaz bruts ;
une alimentation du mélange de gaz bruts (10), pour mettre ledit mélange en contact avec le substrat (8) ;
une alimentation en fluide inerte de lavage pour laver le substrat ;
une sortie pour un mélange purifié de gaz ; et
une alimentation en chauffage et/ou en refroidissement (4 ; 5 ; 6 ; 9) pour chauffer et/ou refroidir le substrat, le mélange de gaz bruts, le fluide inerte de lavage et/ou l'unité de séparation (1) ;
**caractérisé en ce que** le substrat de charbon actif est produit à partir d'une coquille de noix de coco - présentant une granulométrie moyenne de 3,5 mm, une masse volumique de 450 à 550 kg/m$^3$, une surface spécifique de 1000 à 1200 m$^2$/g et le système est agencé pour fournir :

l'adsorption du radon à partir du mélange de gaz bruts sur le substrat à une température de -10 °C à 30 °C de manière à fournir le mélange purifié de gaz dans la sortie ;
le chauffage, ou le chauffage et le lavage du substrat pour désorber ou détacher le radon du substrat à une température de 120 °C à 180 °C ;

et

le refroidissement du substrat avant une adsorption ultérieure, dans lequel

l'unité de séparation est agencée pour effectuer à la fois l'adsorption et la désorption du radon sensiblement à pression atmosphérique.

**11.** Système selon la revendication 10 comprenant en outre un filtre absorbant en amont agencé pour capturer et/ou retenir la descendance particulaire du radon, dans lequel le filtre en amont comprend un matériau fibreux.

**12.** Système selon la revendication 10 ou la revendication 11, dans lequel le système comprend au moins trois unités de séparation (1, 2, 3), le système étant agencé de telle sorte qu'un cycle thermique de chaque unité de séparation est décalé par rapport au cycle d'une unité de séparation précédente d'un temps approximativement égal à une durée d'une phase d'adsorption, et une phase de refroidissement (*ra*) de chaque unité de séparation est simultanée à une phase de chauffage (*ri*) d'une unité de séparation suivante.

**13.** Système selon l'une quelconque des revendications 10 à 12, dans lequel le système comprend un ou plusieurs échangeurs de chaleur pour transférer un chauffage et/ou un refroidissement entre le substrat (8), le mélange de gaz bruts, le fluide inerte de lavage et/ou l'unité de séparation (1).

**Fig. 1**

Fig. 2

Fig. 3

**Fig. 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101450306 B
- US 3890121 A

- FR 2778581

**Non-patent literature cited in the description**

- **ANDREA POCAR.** Low Background Techniques and Experimental Challenges for Borexino and its Nylon Vessels. *A dissertation presented to the faculty of Princeton University in candidacy for the degree of Doctor of Philosophy,* November 2003